Europäisches Patentamt

(19) **European Patent Office**

Office européen des brevets

(11) Numéro de publication: **0 056 775**

**A2**

(12) # DEMANDE DE BREVET EUROPEEN

(21) Numéro de dépôt: **82420007.5**

(22) Date de dépôt: **15.01.82**

(51) Int. Cl.³: **A 45 C 11/20**
**A 47 J 41/00**

(30) Priorité: **16.01.81 FR 8101101**

(43) Date de publication de la demande:
**28.07.82 Bulletin 82/30**

(84) Etats contractants désignés:
**AT BE CH DE GB IT LI LU NL**

(71) Demandeur: **David, Georges**
**rue des Carmes**
**F-01101 Oyonnax(FR)**

(72) Inventeur: **David, Georges**
**rue des Carmes**
**F-01101 Oyonnax(FR)**

(74) Mandataire: **Maisonnier, Jean**
**28 rue Servient**
**F-69003 Lyon(FR)**

(54) **Ensemble portatif à usages multiples, notamment pour le pique-nique.**

(57) L'invention est relative à un ensemble à usages multiples, notamment pour le pique-nique.

Une mallette portative présente deux compartiments intérieurs (5) et (6). Le compartiment (5) est fermé par un couvercle (11) à charnières ; il présente des parois garnies de matériau isolant (12) et peut servir de glacière. Le compartiment (6) est fermé par un couvercle (15) ; il comporte des alvéoles (17) qui permettent de bloquer des ustensiles.

Application : mallette pour le pique-nique.

FIG. 2

EP 0 056 775 A2

L'invention est relative à un ensemble à usages multiples,notamment pour le pique-nique.

Les glacières portatives sont actuellement très répandues, surtout pour le pique-nique.Une glacière de type connu est constituée par une malette avec des parois isolées thermiquement.

Si on abaisse la température du compartiment intérieur,par exemple à l'aide de blocs de glace,celui-ci restera frais longtemps.Les promeneurs qui partent en pique-nique,prennent un panier rempli de provisions et d'ustensiles,tels que des couverts des assiettes, et une glacière pour avoir à leur disposition des boissons fraîches ou des aliments qui craignent la chaleur.

Le but de la présente invention est de concevoir un ensemble qui permette d'une part de disposer d'un compartiment frais et d'autre part de présenter un compartiment ordinaire pour le transport d'ustensiles.

Un ensemble portatif à usages multiples suivant l'invention, est constitué par au moins un compartiment qui présente des parois isoléesthermiquement, et par au moins un autre compartiment à parois ordinaires.

Suivant une autre caractéristique de l'invention,l'ensemble est de forme parallélépipédique et comporte deux compartiments, un compartiment "glacière" et un compartiment "ustensiles".

Suivant une autre caractéristique de l'invention,le compartiment "glacière" est délimité par le fond,les deux grands côtés, le petit côté de l'ensemble et par une cloison transversale, cette cloison étant située au-delà du centre géométrique de l'ensemble,le compartiment "ustensiles" occupant le volume restant.

Suivant une caractéristique supplémentaire de l'invention, le compartiment"glacière" est fermé par un couvercle à charnières,l'axe de rotation du couvercle étant horizontal et transversal.

Suivant une autre caractéristique de l'invention,le compartiment "ustensiles" est fermé par un couvercle à charnières,l'axe de rotation du couvercle étant horizontal et transversal.

Suivant une autre caractéristique de l'invention,le compartiment "glacière" présente un couvercle équipé d'une poignée,placée approximativement à la verticale du centre de gravité de l'ensemble et excentrée par rapport au centre géométrique de ce couvercle,cette poignée servant au portage de l'ensemble.

Suivant une caractéristique supplémentaire de l'invention,
l'ensemble est en matière plastique.

Suivant une autre caractéristique de l'invention,le couvercle
du compartiment "ustensiles" est en matière plastique transparente.

Suivant une autre caractéristique de l'invention,le compartiment
"ustensiles" présente des alvéoles et des logements adaptés à la
forme des ustensiles et récipients qu'ils supportent,de manière
à les immobiliser.

Les dessins annexés,donnés à titre d'exemple non limitatif,
permettront de mieux comprendre les caractéristiques de l'invention.

Fig.1 est une vue en perspective de l'ensemble suivant l'invention.

Fig.2 est une vue en coupe suivant I-I de l'ensemble suivant
l'invention.

Fig.3 est une vue en coupe suivant II-II de l'ensemble
suivant l'invention.

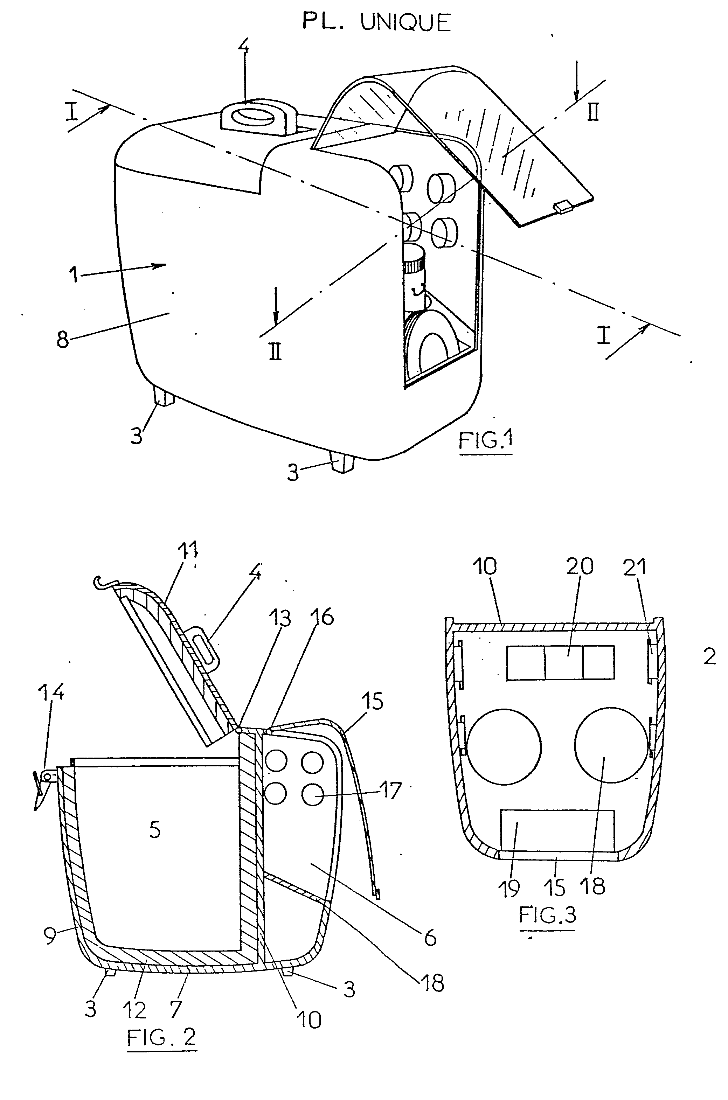

On a représenté fig.1 l'ensemble 1 suivant l'invention.
C'est une malette portative.Elle forme un ensemble compact de
forme parallélépipédique ,en plastique moulé.Elle présente des
pieds 3 et une poignée de portage 4.Elle est constituée par
deux compartiments intérieurs 5 et 6.Le compartiment 5 est délimité par le fond 7,les deux grands côtés latéraux 8,un petit
côté 9,une cloison intérieure  10,et un couvercle supérieur 11.
La cloison 10 est transversale et elle est située au-delà du
centre géométrique de la malette.Le compartiment 5 occupe donc
plus de la moitié du volume intérieur de l'ensemble.Ce logement 5
présente des parois garnies de matériau isolant  12.Le couvercle
11 porte des charnières articulées 13.Ce couvercle se soulève
en pivotant,l'axe de rotation étant horizontal et perpendiculaire au plan d'un côté 8.La fermeture se fait à l'aide d'une agrafe
14.La poignée 4 est placée sur ce couvercle à la verticale  du
centre de gravité  de  l'ensemble 1 ;elle est donc excentrée par
rapport au couvercle 11.

Le compartiment 6 occupe l'espace restant du volume intérieur de la malette 1.Il est fermé par un couvercle  15 que des
charnières 16 font pivoter.L'axe de rotation du couvercle  15 est parallèle à l'axe de rotation du couvercle 11.Ce compartiment 6 présente des alvéoles et des logements(16,17,18,19,20,21, destinés à caler des ustensiles. Les alvéoles 20 recoivent par exemple des couverts.Le logement 19 permet de caler des assiettes, alors que les compartiments 18 permettent de bloquer des récipients cylindriques.Les côtés sont munis de dispositifs 21, qui calent des tasses par un système à baïonnettes.

La position de la poignée 4 doit être judicieusement choisie,afin de permettre un portage commode,ainsi que l'emplacement des charnières 13 et 16 des couvercles,afin de permettre un accès aisé à chacun des compartiments 5 et 6.

On ne sortirait pas du cadre de l'invention en modifiant les volumes occupés par chacun des compartiments.L'ensemble 1 peut être en matière plastique et le couvercle en matière transparente.Il peut être fait en tout autre matériau léger de façon à rester transportable.

4
REVENDICATIONS

1. Ensemble portatif à usages multiples, notamment pour le camping, caractérisé en ce qu'il est constitué par au moins un compartiment qui présente des parois isolées thermiquement, et par au moins un autre compartiment.

2. Ensemble portatif suivant la revendication 1, caractérisé en ce que l'ensemble est de forme parallélépipédique et en ce qu'il comporte deux compartiments: un compartiment isolé "glacière" et un compartiment dit à "ustensiles".

3. Ensemble portatif suivant la revendication 2, caractérisé en ce que le compartiment "glacière" est délimité par le fond, les deux grands côtés et le petit côté de l'ensemble et par une cloison transversale, le compartiment "glacière" occupant plus de la moitié du volume intérieur de l'ensemble.

4. Ensemble portatif suivant l'une quelconque des revendications précédentes, caractérisé en ce que le compartiment "glacière" est fermé par un couvercle à charnières, l'axe de rotation de ce couvercle étant horizontal et perpendiculaire aux plans des grands côtés.

5. Ensemble portatif suivant l'une quelconque des revendications précédentes, caractérisé en ce que le compartiment à "ustensiles" est fermé par un couvercle à charnières, l'axe de rotation étant parallèle à l'axe de rotation du couvercle du compartiment "glacière".

6. Ensemble portatif suivant l'une quelconque des revendications précédentes, caractérisé en ce que le couvercle du compartiment "glacière" est équipé d'une poignée, placée approximativement à la verticale du centre de gravité de l'ensemble et excentrée par rapport au centre de ce couvercle, cette poignée servant au portage de l'ensemble.

7. Ensemble portatif suivant l'une quelconque des revendications précédentes, caractérisé en ce qu'il est en matière plastique.

8. Ensemble portatif suivant l'une quelconque des revendications précédentes, caractérisé en ce que le couvercle du compartiment "ustensiles" est en matière plastique transparente.

9. Ensemble portatif suivant l'une quelconque des revendications précédentes, caractérisé en ce que le compartiment à "ustensiles" présente des alvéoles et des logements adaptés à la forme

5

des ustensiles qu'ils supportent et destinés à les immobiliser.

FIG.1

FIG.2

FIG.3